(19) Europäisches Patentamt
European Patent Office
Office européen des brevets

(11) **EP 4 583 075 A1**

(12) **EUROPEAN PATENT APPLICATION**
published in accordance with Art. 153(4) EPC

(43) Date of publication:
**09.07.2025 Bulletin 2025/28**

(21) Application number: **23859711.6**

(22) Date of filing: **27.04.2023**

(51) International Patent Classification (IPC):
**G08G 1/16** (2006.01)     **B60W 30/08** (2012.01)
**G08G 1/09** (2006.01)

(52) Cooperative Patent Classification (CPC):
**B60W 30/08; G08G 1/09; G08G 1/16**

(86) International application number:
**PCT/JP2023/016705**

(87) International publication number:
**WO 2024/047940 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022137530**

(71) Applicant: **Hitachi Astemo, Ltd.**
**Ibaraki 312-8503 (JP)**

(72) Inventors:
• **KATO Yuma**
**Tokyo 100-8280 (JP)**
• **ISHIGOOKA Tasuku**
**Tokyo 100-8280 (JP)**
• **FUSE Yasuhiro**
**Tokyo 100-8280 (JP)**
• **KONDO Akihiro**
**Tokyo 100-8280 (JP)**
• **ATARASHI Yoshitaka**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **CONTROL SYSTEM, CONTROL METHOD, AND CONTROL PROGRAM**

(57)     Provided are a control system, a control method, and a control program capable of performing efficient travel arbitration while ensuring safety even in a human-mixed environment in which manned vehicles or humans are mixed. In a control system 0 including a moving body (in-vehicle device 1, moving body 3) and a control device 2, the control device 2 includes: a blockage candidate calculation unit 21 that, in a specific moving body (in-vehicle device 1), calculates a blockage area 202 on the basis of a position, a travel plan, and a speed of the specific moving body, and calculates a warning area 203 on the basis of the blockage area 202, a braking time of the specific moving body, and peripheral information; a safety instruction generation unit 22 that selects a safety action instruction on the basis of a type of an area calculated by the blockage candidate calculation unit 21 and a type of an intruding moving body (moving body 3) intruding into the area; and a safety notification unit 23 that notifies the specific moving body of the safety action instruction, and the specific moving body performs an action on the basis of the safety action instruction.

EP 4 583 075 A1

# FIG. 2

2

**CONTROL DEVICE**

MOVING BODY INFORMATION — 201

BLOCKAGE CANDIDATE CALCULATION UNIT — 21

BLOCKAGE AREA — 202

WARNING AREA — 203

SAFETY INSTRUCTION GENERATION UNIT — 22

SAFETY INSTRUCTION INFORMATION — 204

SAFETY NOTIFICATION UNIT — 23

1

**IN-VEHICLE DEVICE**

AUTOMATIC DRIVING UNIT — 11

OUTPUT ARBITRATION UNIT — 12

VEHICLE CONTROL UNIT — 13

## Description

Technical Field

The present invention relates to a control system, a control method, and a control program.

Background Art

As an existing technique for controlling interference between a manned vehicle and an unmanned vehicle, there is a technique described in JP 2021-162976 A (PTL 1). This publication describes a traffic control server and a traffic control system, and a display device capable of wirelessly communicating with the traffic control server, which are characterized by improving safety by braking an unmanned vehicle when a blockage area overlaps with a manned vehicle (moving body) that cannot be controlled.

Citation List

Patent Literature

PTL 1: JP 2021-162976 A

Summary of Invention

Technical Problem

However, in PTL 1, since a fixed area is assumed, collision cannot be prevented depending on traveling of a manned vehicle (moving body). Therefore, it is a problem to ensure safety even in an environment where manned vehicles and people are mixed.
The present invention has been made in view of the above problems, and an object of the present invention is to provide a control system, a control method, and a control program capable of performing efficient travel arbitration while ensuring safety even in a human-mixed environment.

Solution to Problem

In order to solve the above problem, a control system of the present invention is a control system including a moving body and a control device, in which the control device includes: a blockage candidate calculation unit that calculates, in a specific moving body, a blockage area on the basis of a position, a travel plan, and a speed of the specific moving body, and calculates a warning area on the basis of the blockage area, a braking time of the specific moving body, and peripheral information; a safety instruction generation unit that generates a safety action instruction on the basis of a type of an area calculated by the blockage candidate calculation unit and a type of an intruding moving body intruding into the area; and a safety notification unit that notifies the specific moving body of the safety action instruction, and the specific moving body performs an action on a basis of the safety action instruction notified from the safety notification unit.

Advantageous Effects of Invention

According to the present invention, it is possible to perform efficient travel arbitration while ensuring safety even in a human-mixed environment.
The problems, configurations, and effects other than those described above will be clarified from the description of the embodiments below.

Brief Description of Drawings

[FIG. 1] FIG. 1 is a diagram illustrating a configuration of a control system 0 according to a first embodiment.
[FIG. 2] FIG. 2 is a diagram illustrating an outline of a functional block configuration and an overall operation flow of the control system 0 according to the first embodiment.
[FIG. 3] FIG. 3 is a diagram illustrating an example of moving body information 201.
[FIG. 4] FIG. 4 is a view showing an example of a blockage area 202 and a warning area 203.

[FIG. 5] FIG. 5 is a diagram showing another example of the blockage area 202 and the warning area 203.

[FIG. 6] FIG. 6 is a diagram illustrating an example of safety instruction information 204.

[FIG. 7] FIG. 7 is a diagram illustrating a processing flow of a blockage candidate calculation unit 21.

[FIG. 8] FIG. 8 is a diagram showing a specific example for calculating a blockage area 202.

[FIG. 9] FIG. 9 is a diagram illustrating another example of a processing flow of calculation of the blockage area 202.

[FIG. 10] FIG. 10 is a diagram illustrating a specific example when calculating the blockage area 202 by the processing flow illustrated in FIG. 9.

[FIG. 11] FIG. 11 is a diagram illustrating a processing flow of a safety instruction generation unit 22.

[FIG. 12] FIG. 12 is a diagram showing a processing flow of a safety instruction generation unit 22 in a second embodiment.

[FIG. 13] FIG. 13 is a diagram showing an example of rule information 205 in the second embodiment.

[FIG. 14] FIG. 14 is a diagram illustrating a processing flow of a safety instruction generation unit 22 in a third embodiment.

[FIG. 15] FIG. 15 is a diagram illustrating an example of rule information 205 in the third embodiment.

[FIG. 16] FIG. 16 is a diagram illustrating an outline of a functional block configuration and an overall operation flow of a control system 0 in a fourth embodiment.

[FIG. 17] FIG. 17 is a diagram illustrating a processing flow of a speed adjuster 24 in the fourth embodiment.

[FIG. 18] FIG. 18 is a diagram showing a blockage area and a warning area when the vehicle travels at a current speed.

[FIG. 19] FIG. 19 is a diagram showing a blockage area and a warning area when the speed is adjusted.

[FIG. 20] FIG. 20 is a diagram illustrating an outline of a functional block configuration and an overall operation flow of a control system 0 in a fifth embodiment.

Description of Embodiments

The present embodiment relates to a control system 0, an in-vehicle device 1, and a control device 2.

Hereinafter, examples of preferred embodiments (embodiments) of the present invention will be described with reference to the drawings.

[First embodiment]

<Configuration of control system>

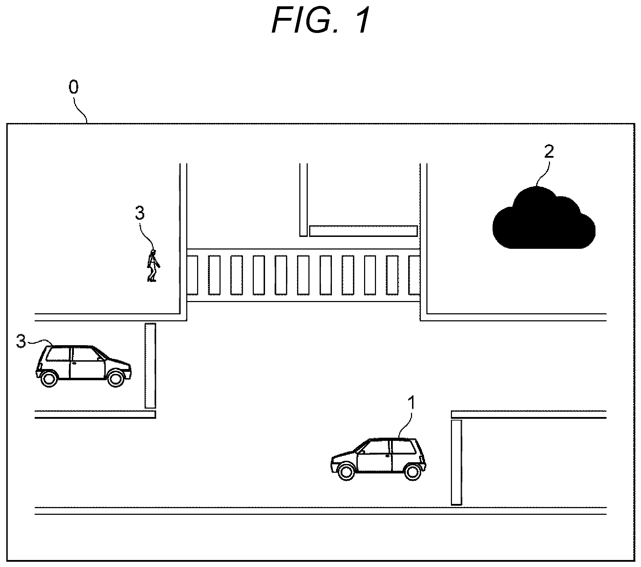

FIG. 1 is a diagram illustrating a configuration of a control system 0 according to a first embodiment.

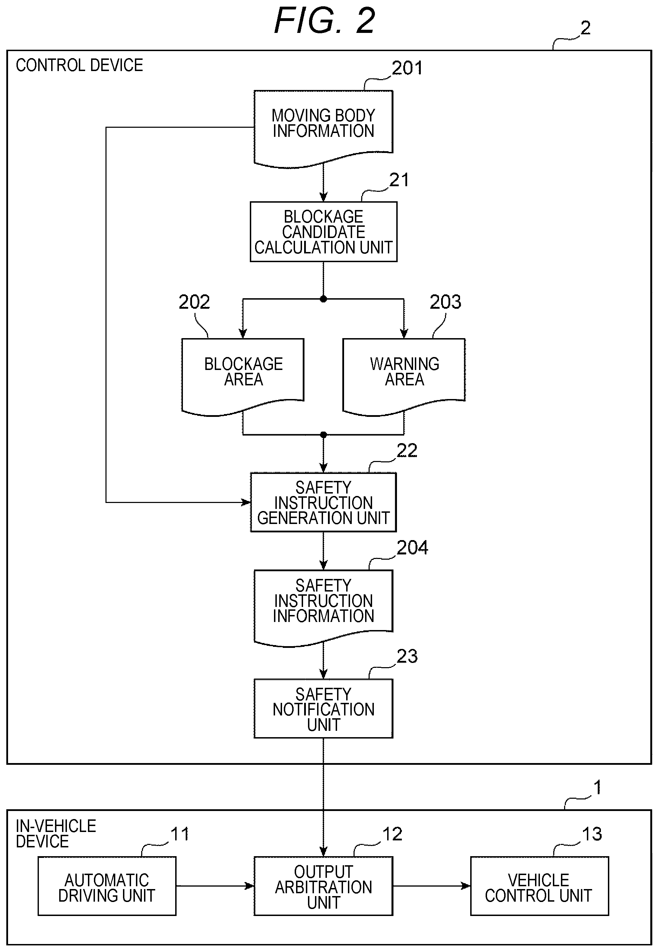

The control system 0 includes an in-vehicle device 1, a control device 2, and a moving body 3. The in-vehicle device 1 has a function of traveling of the vehicle, and performs automatic driving by receiving information for assisting vehicle control from the control device 2 as necessary. That is, the in-vehicle device 1 constitutes an automatic driving vehicle that is a vehicle (moving body) capable of automatic driving. The control device 2 receives moving body information 201 (FIG. 2) such as a position, a speed, and a travel plan from the in-vehicle device 1 and the moving body 3, performs blockage control on an arbitrary area, and gives an instruction to the in-vehicle device 1 and the moving body 3. The moving body 3 is a manned vehicle (non-automatic driving vehicle) or a person (pedestrian) that can exist around the in-vehicle device 1.

<Configurations of control device and in-vehicle device>

FIG. 2 is a diagram illustrating an outline of a functional block configuration and an overall operation flow of the control system 0 according to the first embodiment.

The in-vehicle device 1 includes an automatic driving unit 11, an output arbitration unit 12, and a vehicle control unit 13.

The control device 2 includes a blockage candidate calculation unit 21, a safety instruction generation unit 22, and a safety notification unit 23.

The automatic driving unit 11 calculates a control command value of a vehicle on the basis of a sensor mounted on the vehicle, and controls the vehicle.

The output arbitration unit 12 arbitrates the control command value on the basis of the output of the automatic driving unit 11 and the output of the safety notification unit 23, and inputs the control command value to the vehicle control unit 13.

The vehicle control unit 13 controls the vehicle on the basis of the arbitrated control command value.

The blockage candidate calculation unit 21 calculates the blockage area 202 and the warning area 203 on the basis of the moving body information 201 such as the position, speed, and travel plan received from the in-vehicle device 1 or the moving body 3.

The safety instruction generation unit 22 performs the blockage control on the basis of the blockage area 202, the warning area 203, and the moving body information 201, and generates safety instruction information 204.

The safety notification unit 23 notifies (the output arbitration unit 12 of) the in-vehicle device 1 of the safety instruction information 204.

<Moving body information>

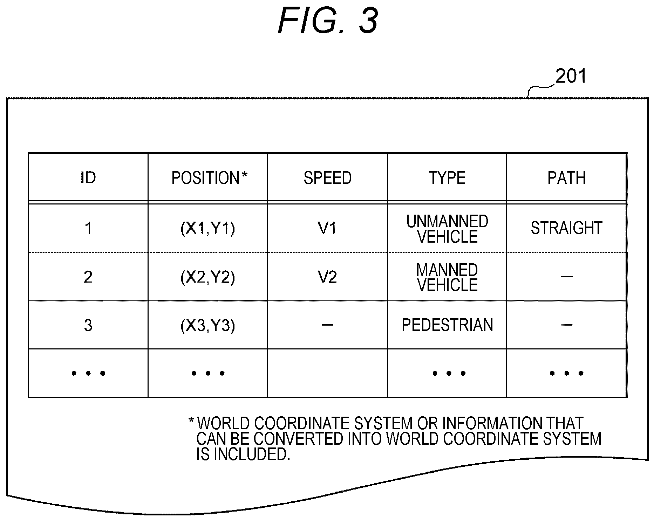

FIG. 3 is a diagram illustrating an example of the moving body information 201 in the present embodiment.

The moving body information 201 manages a position, a speed, a type, and a path (travel plan) of each moving body (in-vehicle device 1 and moving body 3) existing in the assumed environment of the present embodiment by assigning an ID. This information may be notified to the control device 2 by each moving body (in-vehicle device 1 and moving body 3), or may be detected by using an infrastructure sensor or the like. In the present embodiment, the type of each moving body is classified into at least a moving body capable of controlling an action (for example, an unmanned vehicle) and a moving body incapable of controlling an action (for example, a manned vehicle or a person). In other words, in the present embodiment, the type of each moving body is classified into an automatic driving vehicle (for example, an unmanned vehicle), a non-automatic driving vehicle (for example, a manned vehicle), and a person (pedestrian). In addition, for example, since a manned vehicle is driven by a person, it is conceivable that the manned vehicle has current speed information but does not include information on a path in which the manned vehicle travels. On the other hand, even in a manned vehicle, for example, there may be a destination, and a path to the destination may be determined. The same applies to the pedestrian, but it is conceivable that the pedestrian does not have speed information because the traveling direction and the speed of the pedestrian are easily changed.

<Blockage area and warning area>

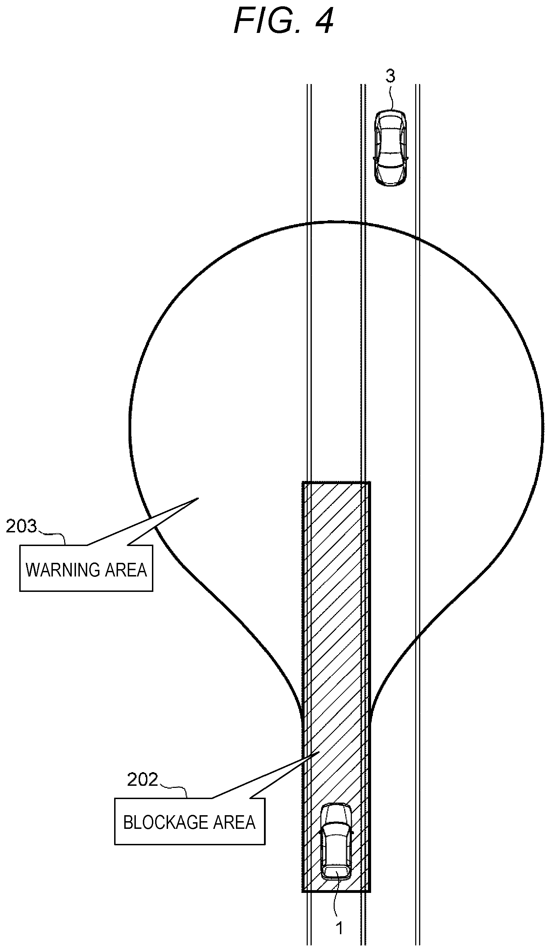

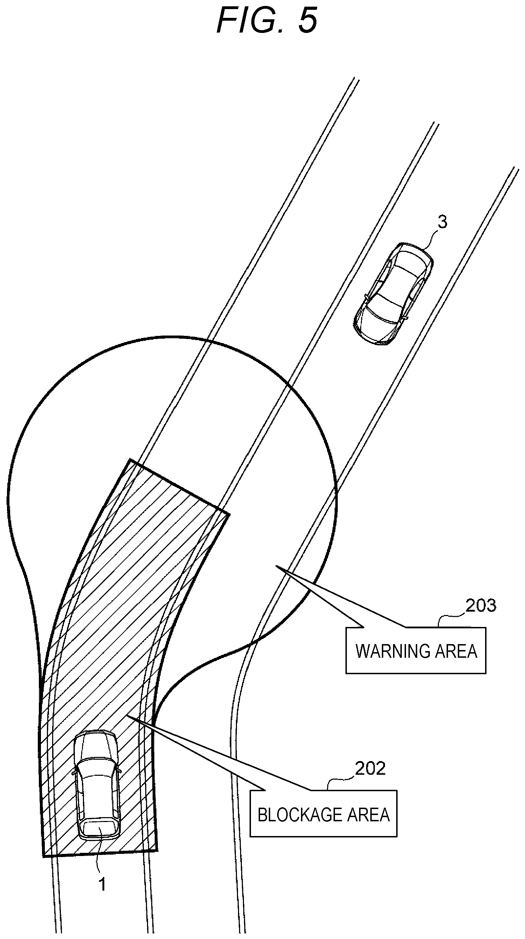

FIGS. 4 and 5 are diagrams illustrating examples of the blockage area 202 and the warning area 203 in the present embodiment.

The blockage area 202 is an area indicated by hatching in FIGS. 4 and 5. The warning area 203 is an area existing outside the blockage area 202.

The blockage area 202 is an area where a specific moving body (in-vehicle device 1) travels until the specific moving body stops by applying braking.

The warning area 203 is an area necessary for preventing collision even when the moving body 3 moves.

As illustrated in FIG. 4, it is conceivable that the vehicle is traveling (straight) on a straight road, and as illustrated in FIG. 5, it is also conceivable that the vehicle is traveling on a curve. Although not illustrated, the area is determined according to various traveling patterns such as right/left turning.

<Safety instruction information>

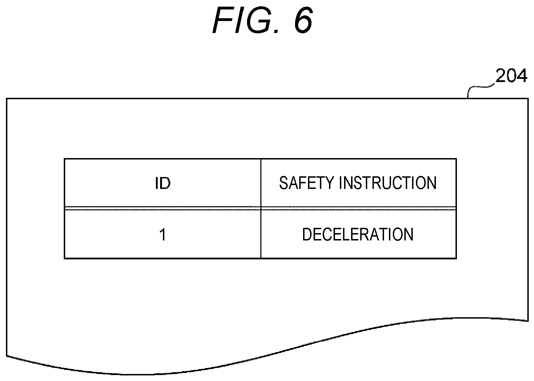

FIG. 6 is a diagram illustrating an example of the safety instruction information 204 in the present embodiment.

As illustrated in FIG. 6, a safety instruction such as deceleration is issued to a target vehicle.

<Blockage candidate calculation unit>

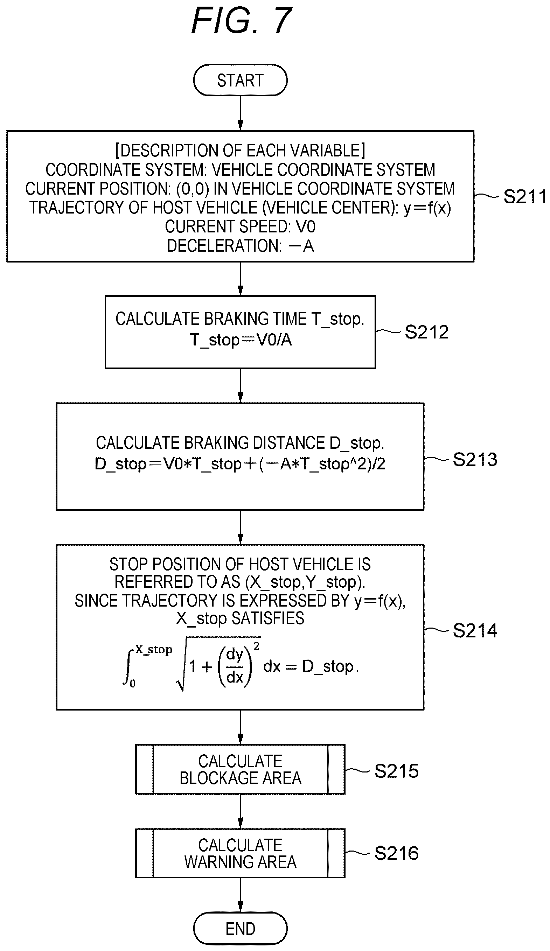

FIG. 7 is a diagram illustrating a processing flow of the blockage candidate calculation unit 21 in the present embodiment.

As shown in step S211, the premise is as follows.

Coordinate system: Vehicle coordinate system (Vehicle coordinate system and world coordinate system can be transformed.)

Current position: (0, 0)
Trajectory of host vehicle: $y = f(x)$
Current speed (m/s): V0
Deceleration (m/s^2): -A

In step S212, the braking time T_stop is calculated. The braking time is determined by $T\_stop = V0/A$.

In step S213, the braking distance D_stop is calculated. The braking distance is obtained by $D\_stop = V0*T\_stop + (-A*T\_stop^2)/2$.

In step S214, the stop position of the host vehicle is set to (X_stop, Y_stop), and stop position X_stop satisfies the

following (Math. 1).

(Math. 1)

$$\int_{0}^{X\_stop} \sqrt{1 + \left(\frac{dy}{dx}\right)^2}\, dx = D\_stop$$

In step S215, the blockage area 202 is calculated.
In step S216, the warning area 203 is calculated.

<Calculation of blockage area>

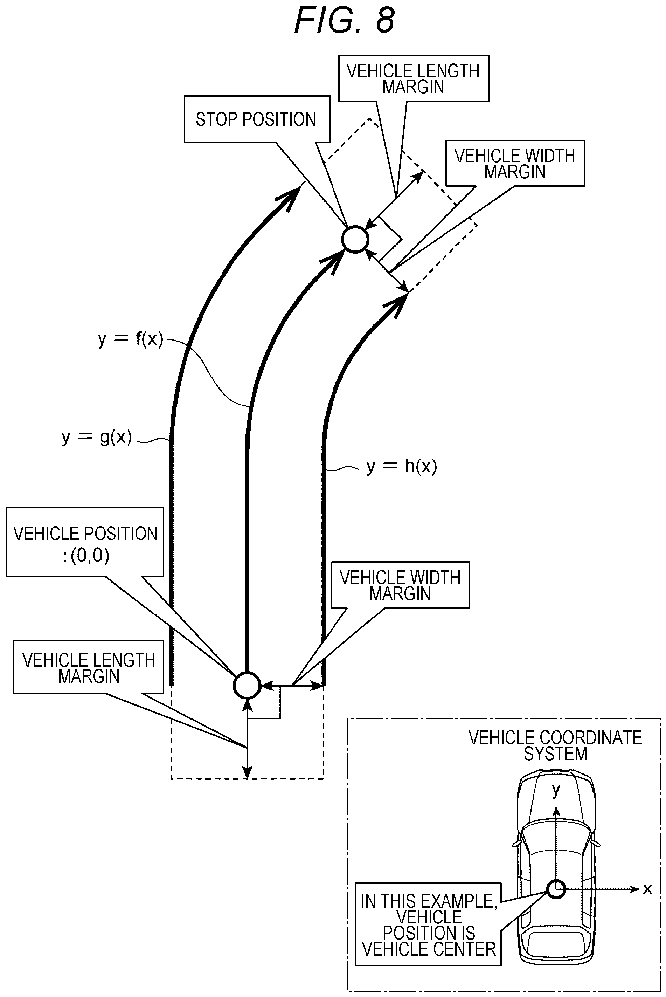

FIG. 8 is a diagram illustrating a specific example for calculation of the blockage area 202.
The blockage area 202 is obtained from a vehicle width, a vehicle length, a trajectory (travel plan), a position, a speed, and an acceleration (deceleration). An example will be described below.
When the blockage area 202 is calculated, the trajectory on the left side of the vehicle is represented by $y = g(x)$, and the area on the right side of the vehicle is represented by $y = h(x)$.
Consider an arbitrary point $(a, f(a))$ on the trajectory.
Since the inclination of the tangent at any point is $f'(a)$, it can be seen that the inclination of the normal is $-1/f'(a)$. (When the inclination of the tangent and the inclination of the normal are multiplied, -1 is obtained. That is, it can be seen that they are orthogonal to each other.)
Since the normal passes through an arbitrary point $(a, f(a))$, the normal can be expressed by $y = -1/f'(a)*x + a/f'(a) + f(a)$.
Next, functions on the left and right sides of the vehicle will be considered. An intersection point with the normal is defined as $(c, d)$.
Since $(c, d)$ passes through the normal, $d = (a-c)/f'(a) + f(a)$.
Since the vehicle size is constant, the distance D_vehicle width margin between an arbitrary point and an intersection $(c, d)$ is always constant. That is, $(a-c)^2 + (f(a)-d)^2 = $ D_vehicle width margin$^2$.
From these, by substituting d, (Math. 2) of the following equation is obtained.

(Math. 2)

    (a-c)^2 + (f(a) - (a-c)/f'(a) + f(a))^2 = D_vehicle width

margin^2

    ⟺  (f'(a)^2+1)  *  (c-a)^2  =  (f'(a)*D_vehicle  width

margin)^2

    ⟺ c = a ± f'(a)*D_vehicle width margin

Since the range of a is $0 \leq a \leq$ X_stop, the left side is -D_vehicle width margin $\leq x \leq$ X_stop-f'(X_stop)*D_vehicle width margin, and the right side is D_vehicle width margin $\leq x \leq$ X_stop + f'(X_stop)*D_vehicle width margin.
By the obtained c, since the left side is in the negative direction of x and the right side is in the positive direction of x, (Math. 3) of the following equation is obtained.

(Math. 3)

$\cdot$ g(x)

d = g(c) = (a - (a - f'(a) *D_vehicle width margin))/f'(a)

+ f(a)

$\Leftrightarrow$ d = f(a) + D_vehicle width margin

$\Leftrightarrow$ y = f(x) + D_vehicle width margin, -D_vehicle width

margin $\leq$ x $\leq$ X_stop -f'(X_stop) *D_vehicle width margin

$\cdot$ h(x)

d = h(c) = (a - (a + f'(a) *D_vehicle width margin))/f'(a)

+ f(a)

$\Leftrightarrow$ d = f(a) -D_vehicle width margin

$\Leftrightarrow$ y = f(x) -D_vehicle width margin, D_vehicle width

margin $\leq$ x $\leq$ X_stop + f'(X_stop)*D_vehicle width margin

As illustrated in FIG. 8, the blockage area 202 is an area obtained by extending g(x) and h(x) by the vehicle length margin.

In addition, in a case where there is a section in which the trajectory cannot be expressed by y = f(x), x = (arbitrary constant), so that the blockage area 202 can be determined as the following (Math. 4).

-D_vehicle width margin $\leq$ x $\leq$ D_vehicle width margin, -D_vehicle length margin $\leq$ y $\leq$ D_stop + vehicle length margin

(Math. 4)

<Another example of calculation of blockage area>

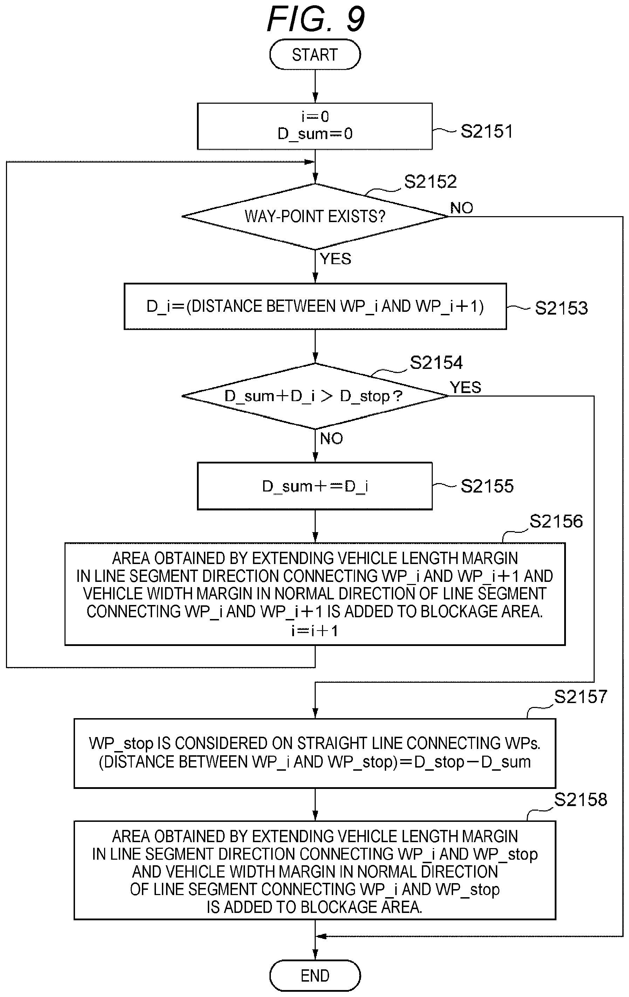

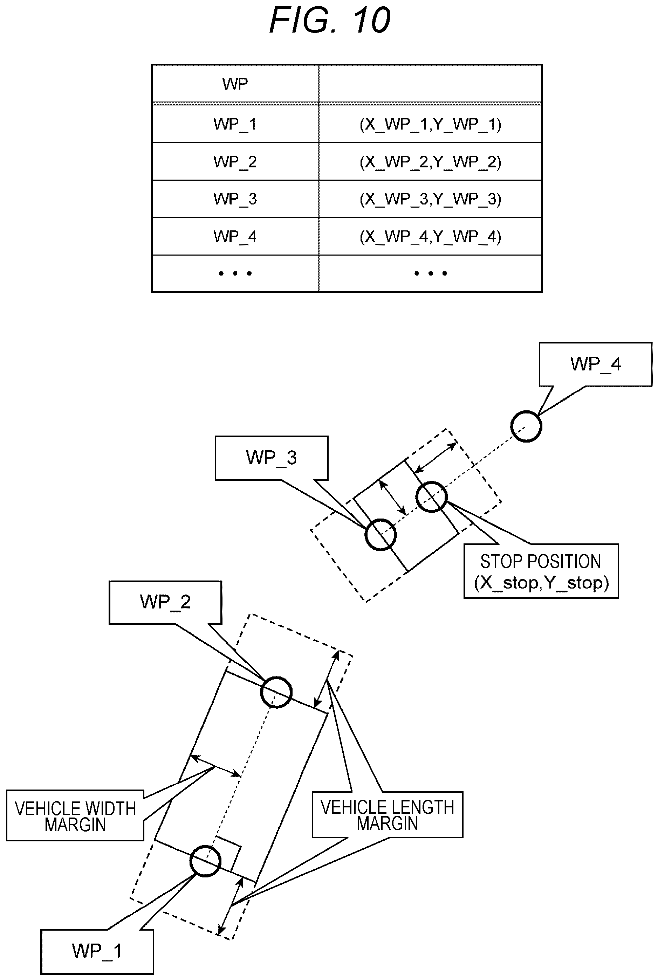

FIG. 9 is a diagram illustrating another example of the processing flow of calculation of the blockage area 202. FIG. 10 is a diagram illustrating a specific example when the blockage area 202 is calculated by the processing flow illustrated in FIG. 9.

In step S2151, i and D_sum are initialized to 0.

In step S2152, it is determined whether or not a waypoint (WP) exists, and in a case where the waypoint exists, the process proceeds to step S2153, and in a case where the waypoint does not exist, the process ends.

In step S2153, the distance between the waypoints to be processed is calculated.

In step S2154, it is determined whether the sum of the distances (D_sum) so far and the sum of the distances (D_i) between the waypoints to be processed exceed the braking distance (D_stop). If the sum exceeds the braking distance, the process proceeds to step S2157, and otherwise, the process proceeds to step S2155.

In step S2155, the distance between the waypoints to be processed is added to the sum of the distances so far.

In step S2156, the blockage area is calculated in consideration of the vehicle length and the vehicle width for the line segment of the waypoint to be processed. The processing proceeds to the next waypoint.

The areas are as shown in WP_1 and WP_2 in FIG. 10.

In step S2157, a stop position is calculated such that the distance between WP_i and the stop position (WP_stop) becomes a difference between the braking distance (D_stop) and the sum (D_sum) of the distances until now.

In step S2158, the blockage area is calculated in consideration of the vehicle length and the vehicle width with respect to the line segment between WP_i and the stop position (WP_stop). Areas such as WP_3 and a stop position (X_stop, Y_stop) in FIG. 10 are obtained. For example, in the case of FIG. 10, (distance between WP_1 and WP_2) + (distance between WP_2 and WP_3) + (distance between WP_3 and stop position) = D_stop is obtained.

The blockage area is calculated by such a procedure.

That is, in the present embodiment, the blockage candidate calculation unit 21 calculates the blockage area on the basis of the position, the travel plan, and the speed of the in-vehicle device 1, which is a specific moving body, in the in-vehicle device 1. Specifically, in the in-vehicle device 1 that is a specific moving body, the blockage candidate calculation unit 21 calculates the braking distance and the braking time on the basis of the position, the travel plan, and the speed of the in-vehicle device 1, and calculates an area based on the travel plan and the braking distance as the blockage area.

<Calculation of warning area>

The warning area 203 is an area where the moving body 3 can move until a specific moving body (in-vehicle device 1) brakes and stops, and is obtained from the braking time and trajectory of the specific moving body (in-vehicle device 1) and the speed (current speed or assumed maximum speed) of the moving body 3. An example is shown below.

It is assumed that the trajectory of the host vehicle can be expressed as x = f_x(t) and y = f_y(t) using a parameter t (t represents time, and $0 \leq t \leq T\_stop$).

The warning area 203 can be calculated as in the following (Math. 5).

$$(x - f\_x(t))^2 + (y - f\_y(t))^2 \leq (V\_other * t)^2, 0 \leq t \leq T\_stop \qquad \text{(Math. 5)}$$

V_other is the speed of the moving body 3, and the current speed may be referred to from the moving body information 201, or the assumed maximum speed of the moving body 3 may be referred to.

That is, in the present embodiment, in the in-vehicle device 1 that is a specific moving body, the blockage candidate calculation unit 21 calculates the warning area outside the blockage area on the basis of the blockage area, the braking time of the in-vehicle device 1, and the peripheral information (speed of the moving body 3 (current speed or assumed maximum speed), and the like). Specifically, the blockage candidate calculation unit 21 calculates, as the warning area, an area where the moving body 3 can move outside the blockage area during the braking time on the basis of the blockage area and the braking time of the in-vehicle device 1 and the speed of the moving body 3 or the assumed maximum speed of the moving body 3. In other words, the blockage candidate calculation unit 21 calculates, as the warning area, an area where the moving body 3 travels outside the blockage area during the braking time on the basis of the position and the travel plan of the moving body 3, and the speed of the moving body 3 or the assumed maximum speed of the moving body 3.

<Safety instruction generation unit>

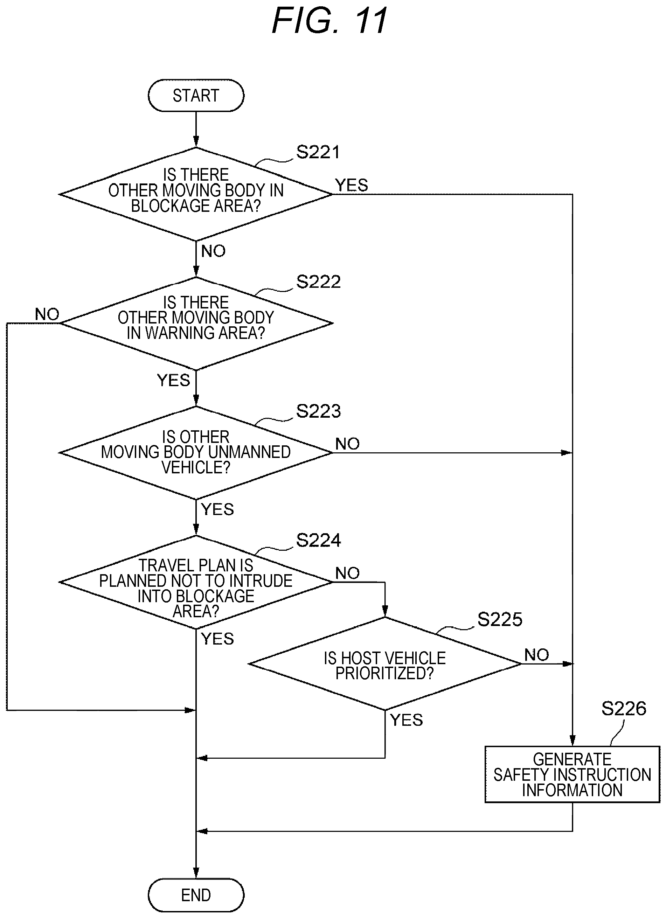

FIG. 11 is a diagram illustrating a processing flow of the safety instruction generation unit 22.

In step S221, it is determined whether or not the moving body 3 (another moving body) exists in the blockage area 202, in a case where the moving body 3 (another moving body) exists, the process proceeds to step S226, and in a case where the moving body 3 does not exist, the process proceeds to step S222.

In step S222, it is determined whether or not the moving body 3 exists in the warning area 203, and in a case where the moving body 3 exists, the process proceeds to step S223, and in a case where the moving body 3 does not exist, the process ends.

In step S223, it is determined whether or not the moving body 3 is an unmanned vehicle, and in a case where the moving body 3 is an unmanned vehicle, the process proceeds to step S224, and in a case where the moving body 3 is not an unmanned vehicle, the process proceeds to step S226.

In step S224, it is determined whether or not the travel plan is a plan not to intrude into the blockage area 202, and in a case where the travel plan is a plan not to intrude into the blockage area 202, the process is terminated, and in a case where the travel plan is a plan to intrude into the blockage area 202, the process proceeds to step S225.

In step S225, it is determined whether or not the host vehicle is prioritized, and in a case where the host vehicle is prioritized, the process is terminated, and in a case where the host vehicle is not prioritized, the process proceeds to step S226.

In step S226, the safety instruction information 204 (FIG. 6) is generated.

In such a procedure, the safety instruction generation unit 22 determines contents to be instructed to the vehicle.

That is, the safety instruction generation unit 22 generates the safety action instruction (safety instruction information 204) on the basis of the type (blockage area, warning area) of the area calculated by the blockage candidate calculation unit 21 and the type (unmanned vehicle, manned vehicle, etc.) of the moving body 3 (another moving body) intruding into the area.

<Safety notification unit>

The safety notification unit 23 notifies (the output arbitration unit 12 of) the in-vehicle device 1 of the safety action instruction (safety instruction information 204) generated by the safety instruction generation unit 22.

According to the control system 0, the in-vehicle device 1, and the control device 2 in the first embodiment, the blockage area 202 and the warning area 203 are calculated, and braking is performed in a case of intrusion into the blockage area 202 or the warning area 203, so that it is possible to prevent collision with the moving body 3. In addition, by permitting intrusion depending on the type of the moving body 3, traveling efficiency can be improved.

[Second embodiment]

A control system 0 according to a second embodiment of the present invention will be described.

The difference from the first embodiment is that, by permitting the intrusion of the moving body 3 into the warning area 203 by adding the rule information 205, it is possible to improve the traveling efficiency while ensuring the safety when the rule is observed.

Note that the same components as those of the first embodiment are denoted by the same reference numerals, and the description thereof will be omitted.

<Safety instruction generation unit>

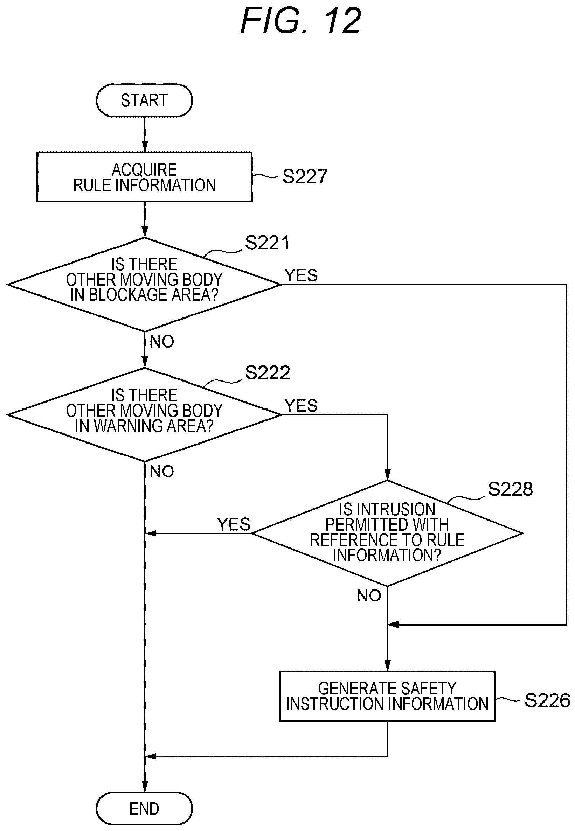

FIG. 12 is a diagram illustrating a processing flow of the safety instruction generation unit 22 in the second embodiment.

In step S227, rule information is acquired.

In step S221, it is determined whether or not the moving body 3 (another moving body) exists in the blockage area 202, in a case where the moving body 3 (another moving body) exists, the process proceeds to step S226, and in a case where the moving body 3 does not exist, the process proceeds to step S222.

In step S222, it is determined whether or not the moving body 3 exists in the warning area 203, in a case where the moving body 3 exists, the process proceeds to step S228, and in a case where the moving body 3 does not exist, the process ends.

In step S228, with reference to the rule information 205, it is determined whether to permit the intrusion of the moving body 3 existing in the warning area 203, in a case where the intrusion is permitted, the process is terminated, and in a case where the intrusion is not permitted, the process proceeds to step S226.

In step S226, the safety instruction information 204 (FIG. 6) is generated.

In such a procedure, the safety instruction generation unit 22 determines contents to be instructed to the vehicle.

That is, the safety instruction generation unit 22 generates the safety action instruction (safety instruction information 204) on the basis of the rule in addition to the type (blockage area, warning area) of the area calculated by the blockage candidate calculation unit 21 and the type (unmanned vehicle, manned vehicle, etc.) of the moving body 3 (another moving body) intruding into the area.

<Rule information>

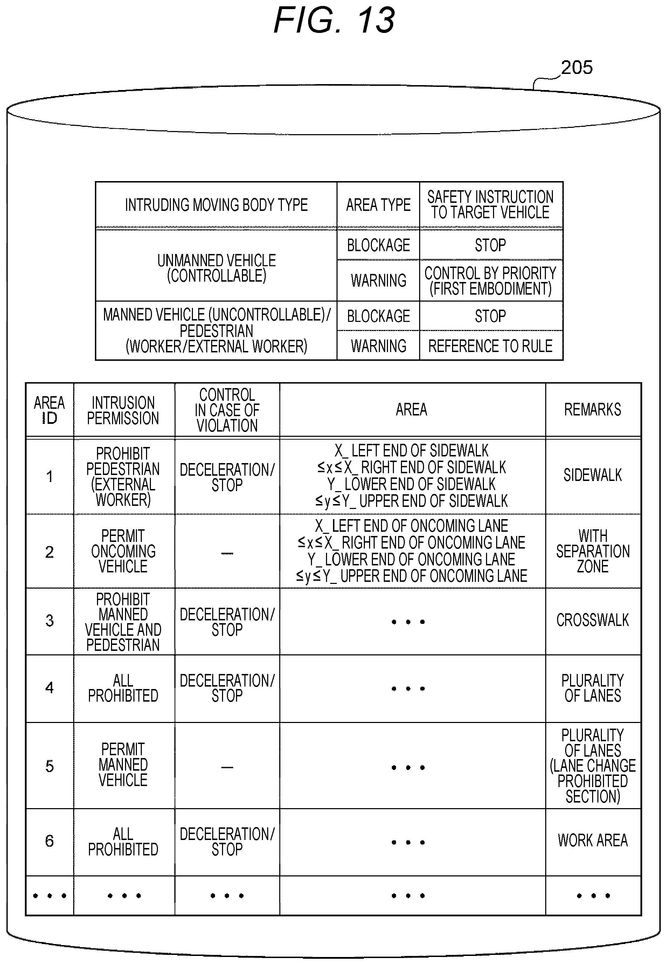

FIG. 13 is a diagram illustrating an example of rule information 205 in the second embodiment.

For example, when the moving body 3 that has intruded into the warning area 203 is an unmanned vehicle (controllable), control (traveling/deceleration as it is) is performed according to the priority.

When a manned vehicle (uncontrollable) or a pedestrian (worker/external worker) is present in the warning area 203, the processing is determined on the basis of rules.

In the case of a pedestrian (worker) on the sidewalk, since rule compliance is thorough, it can be determined that the pedestrian does not jump out to the roadway, and it is possible to permit the pedestrian to intrude into the sidewalk area in the warning area 203. On the other hand, in the case of a pedestrian (external worker), it is difficult to comply with the rules thoroughly, and therefore intrusion into the sidewalk area is not permitted.

In a case where there is a separation zone on the roadway, it can be determined that there is no possibility that the oncoming vehicle intrudes into the traveling lane, so that the intrusion of the moving body 3 into the roadway area can be permitted.

In the case of a crosswalk, since there is a possibility that a pedestrian will cross, intrusion into the crosswalk area is not permitted.

In a case where there are a plurality of lanes, there is a possibility of collision when the manned vehicle makes a sudden lane change, and thus intrusion into the lane area is not permitted. On the other hand, in the case of the lane change prohibited section, since the lane cannot be changed, intrusion into the lane area is permitted.

For example, in a case where an article such as a container is placed on a road or in a case where the article can be moved by a device such as a crane, it is determined that there is a possibility of collision in the movable range, and intrusion into the work area is not permitted. In other words, when the vehicle interferes with the area, the vehicle on which the in-vehicle device 1 is mounted decelerates/stops.

As described above, the safety instruction generation unit 22 generates the safety action instruction (safety instruction information 204) on the basis of a rule including road information such as a sidewalk, a separation zone, a crosswalk, a plurality of lanes, and a work area.

According to the control system 0, the in-vehicle device 1, and the control device 2 in the second embodiment, the rule information 205 is added to permit the intrusion of the moving body 3 into the warning area 203, so that it is possible to improve the traveling efficiency while ensuring the safety in the case of observing the rule.

[Third embodiment]

A control system 0 according to a third embodiment of the present invention will be described.

The difference from the first and second embodiments is that by defining a safety instruction to an intruding moving body in the rule information 205, a warning is issued to the intruding moving body 3, so that safety can be improved.

The same components as those in the first and second embodiments are denoted by the same reference numerals, and the description thereof will be omitted.

<Safety instruction generation unit>

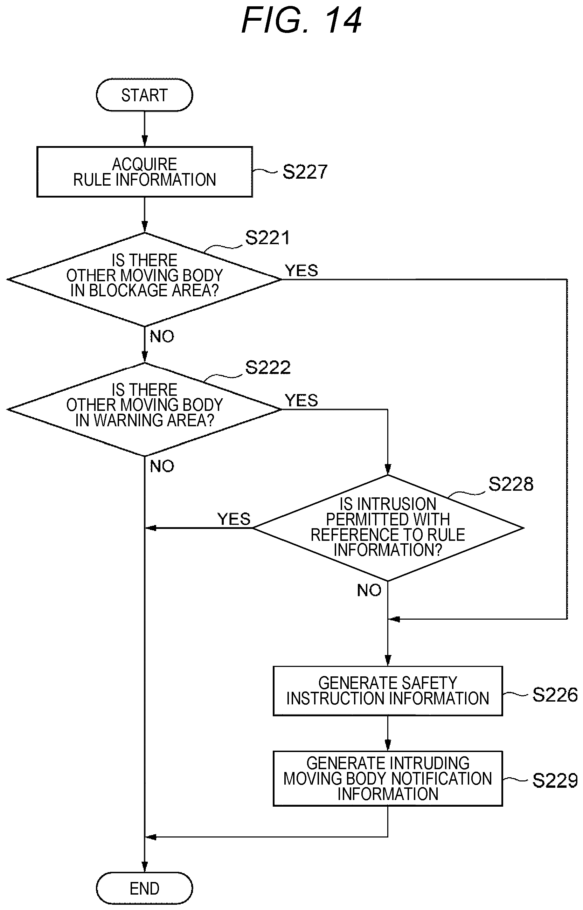

FIG. 14 is a diagram illustrating a processing flow of the safety instruction generation unit 22 in the third embodiment.

In step S227, rule information 205 is acquired.

In step S221, it is determined whether or not the moving body 3 (another moving body) exists in the blockage area 202, in a case where the moving body 3 (another moving body) exists, the process proceeds to step S226, and in a case where the moving body 3 does not exist, the process proceeds to step S222.

In step S222, it is determined whether or not the moving body 3 exists in the warning area 203, in a case where the moving body 3 exists, the process proceeds to step S228, and in a case where the moving body 3 does not exist, the process ends.

In step S228, with reference to the rule information 205, it is determined whether to permit the intrusion of the moving body 3 existing in the warning area 203, in a case where the intrusion is permitted, the process is terminated, and in a case where the intrusion is not permitted, the process proceeds to step S226.

In step S226, the safety instruction information 204 (FIG. 6) is generated.

In step S229, the intruding moving body notification information is generated. It is assumed that the moving body (manned vehicle, pedestrian) has a device having a function of notifying the intruding moving body notification information notified from the control device 2 by at least one of sound, light, vibration, and video. The moving body (manned vehicle, pedestrian) to which this information is notified is warned by at least one of sound, light, vibration, and video by a device possessed by the moving body.

In such a procedure, the safety instruction generation unit 22 determines contents to be instructed to the vehicle.

<Rule information>

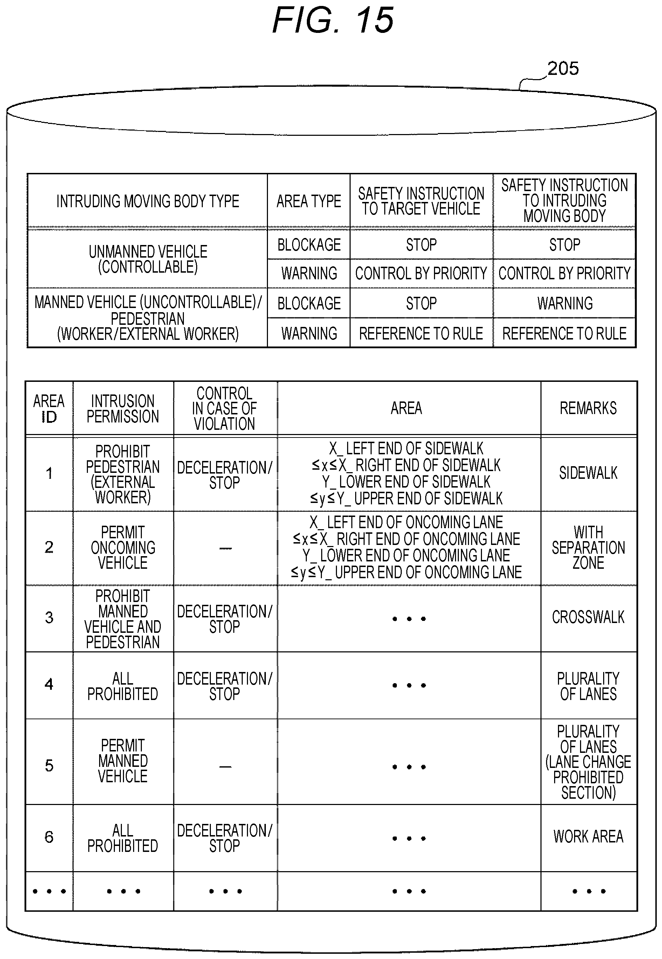

FIG. 15 is a diagram illustrating an example of rule information 205 in the third embodiment.

As illustrated in FIG. 15, when the manned vehicle/pedestrian intrudes into the blockage area 202, the control device 2 transmits the intruding moving body notification information, and a warning is issued through a device possessed by the manned vehicle/pedestrian.

In addition, when the manned vehicle/pedestrian intrudes into the warning area 203, in a case where the intrusion is not permitted, the control device 2 transmits the intruding moving body notification information, and a warning is issued through a device possessed by the manned vehicle/pedestrian.

According to the control system 0, the in-vehicle device 1, and the control device 2 in the third embodiment, by defining a safety instruction to an intruding moving body in the rule information 205, it is possible to improve safety by issuing a warning to the intruding moving body 3.

[Fourth embodiment]

A control system 0 according to a fourth embodiment of the present invention will be described.

The difference from the first, second, and third embodiments is that when interference is expected, the number of times of acceleration/deceleration can be reduced and stable traveling can be realized by adjusting the speed of a specific moving body (in-vehicle device 1).

Note that the same reference numerals are given to the same configurations as those of the first, second, and third embodiments, and the description thereof will be omitted.

<Configurations of control device and in-vehicle device>

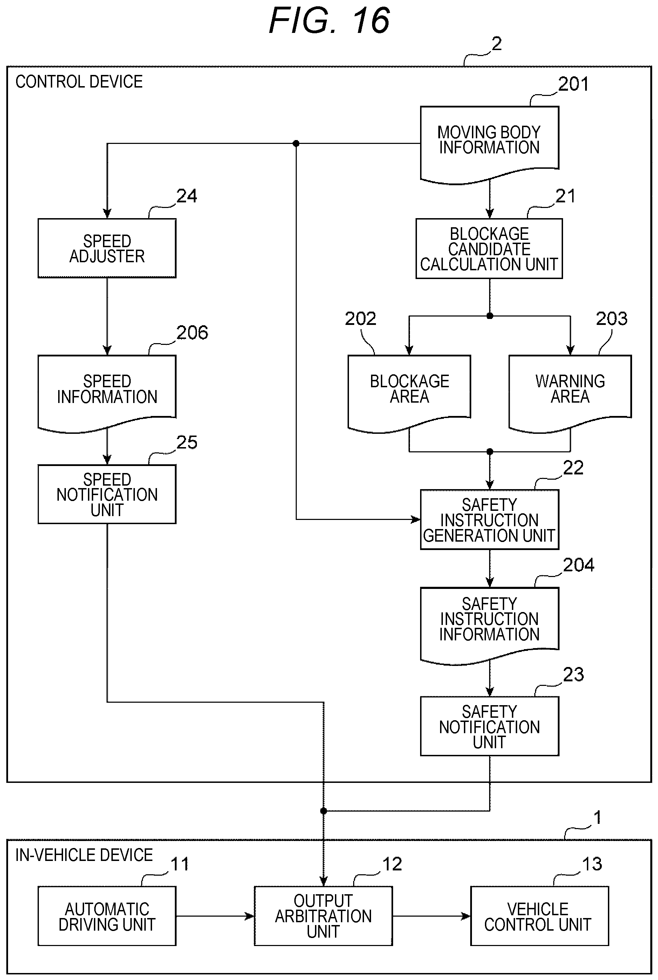

FIG. 16 is a diagram illustrating an outline of a functional block configuration and an overall operation flow of the control system 0 in the fourth embodiment.

In addition to the configuration of the first embodiment, the control device 2 includes a speed adjuster 24 that calculates speed information 206 on the basis of the moving body information 201 and a speed notification unit 25 that transmits (notifies) the speed information 206 to (the output arbitration unit 12 of) the in-vehicle device 1.

<Speed adjuster>

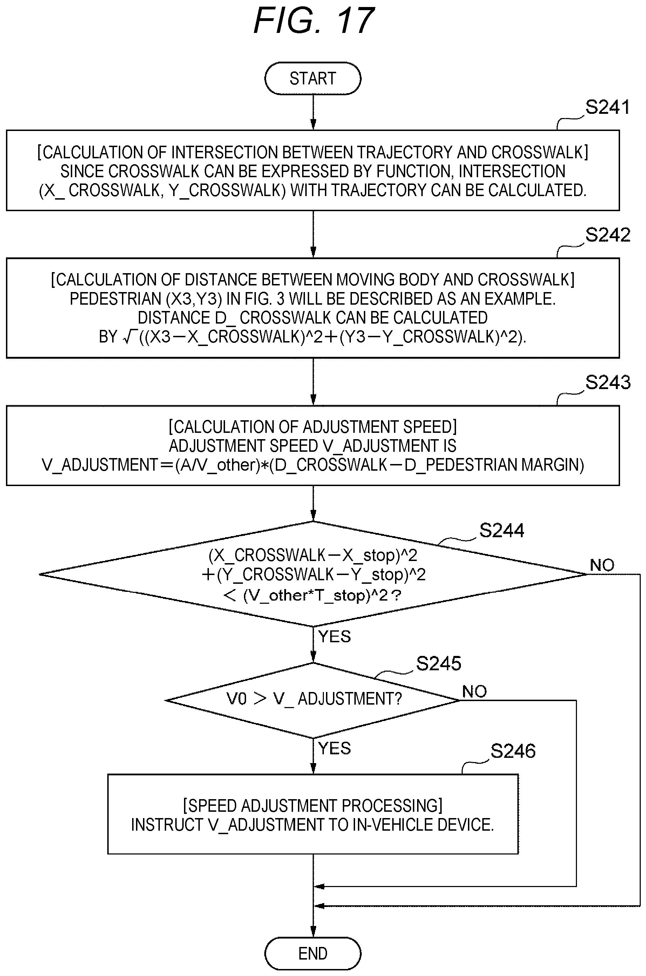

FIG. 17 is a diagram illustrating a processing flow of the speed adjuster 24 in the present embodiment.

In step S241, an intersection between the trajectory and the crosswalk is calculated. Since the crosswalk can be expressed by a function, an intersection (X_crosswalk, Y_crosswalk) with the trajectory can be calculated.

In step S242, the distance between the moving body 3 and the crosswalk is calculated. A pedestrian (X3, Y3) in FIG. 3 will be described as an example. Distance D_crosswalk can be calculated by $\sqrt{((X3-X\_crosswalk)^2 + (Y3-Y\_crosswalk)^2)}$.

In step S243, an adjustment speed is calculated. Adjustment speed V_adjustment can be calculated by V_adjustment = (A/V_other)*(D_crosswalk-D_pedestrian margin).

In step S244, it is determined whether or not $(X\_crosswalk-X\_stop)^2 + (Y\_crosswalk-Y\_stop)^2$ is smaller than $(V\_other*T\_stop)^2$, and if not, the process proceeds to step S245, otherwise the process ends.

In step S245, it is determined whether or not V0 is larger than V_adjustment. If V0 is larger than V_adjustment, the process proceeds to step S246. If not, the process ends.

In step S246, the V_adjustment is output to (the output arbitration unit 12 of) the in-vehicle device 1 as the speed information 206 (the speed notification unit 25).

In such a procedure, the speed adjuster 24 calculates a speed (V_adjustment) for preventing interference, and notifies (the output arbitration unit 12 of) the in-vehicle device 1 of V_adjustment when the current speed is larger than V_adjustment.

That is, in the present embodiment, the speed adjuster 24 of the control device 2 outputs the speed instruction (speed information 206) (for speed adjustment) to the in-vehicle device 1 when the position of the moving body 3 after an arbitrary time is positioned in the blockage area or the warning area of the in-vehicle device 1 on the path where a specific moving body (in-vehicle device 1) moves.

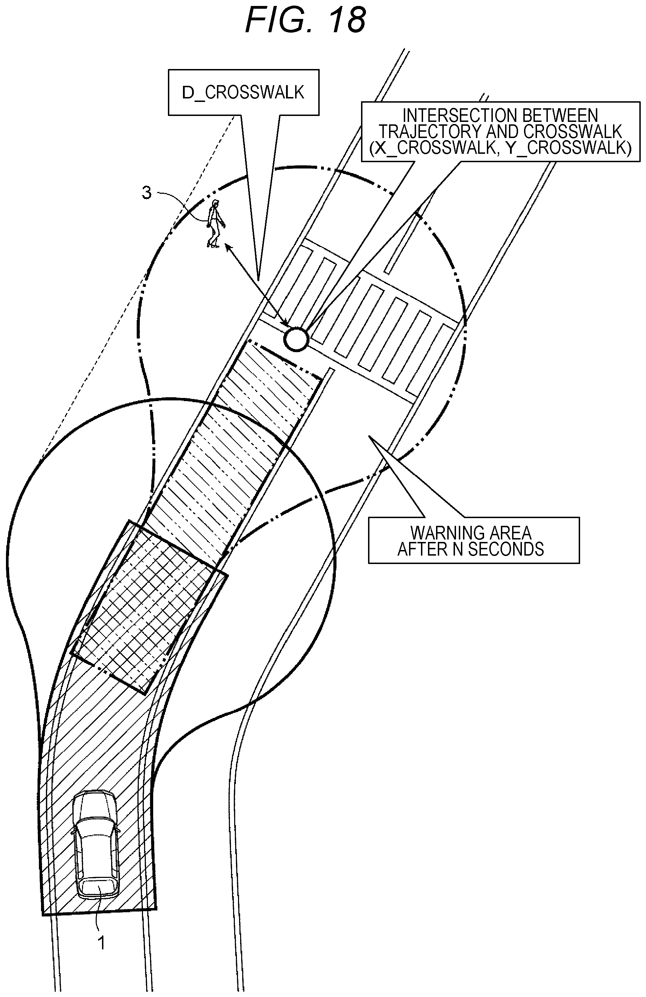

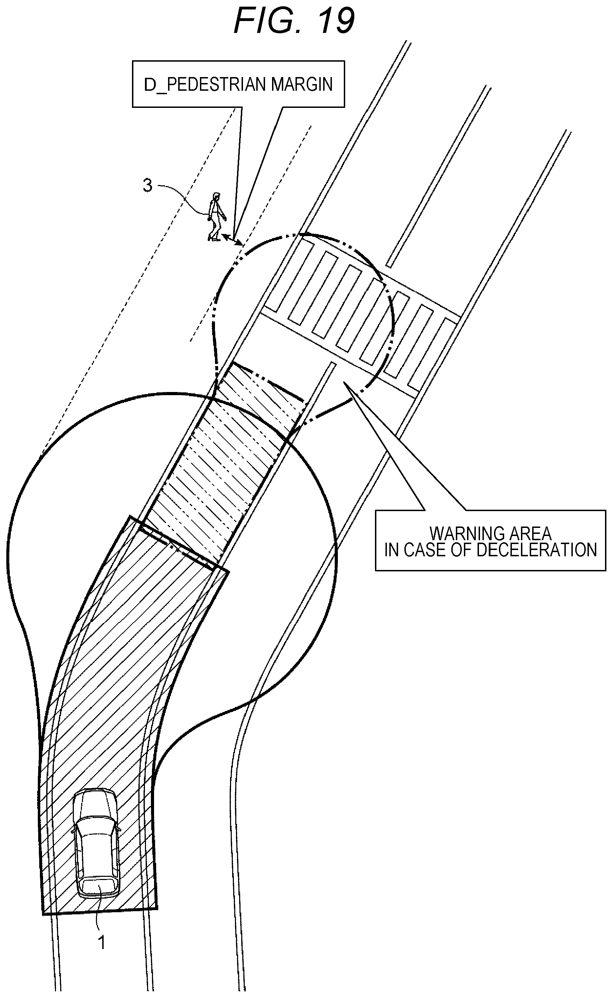

FIG. 18 is a diagram illustrating a blockage area and a warning area when the vehicle travels at the current speed. FIG. 19 is a diagram showing the blockage area and the warning area when the speed is adjusted. A specific example will be described with reference to FIGS. 18 and 19.

As illustrated in FIG. 18, in the case of traveling at the current speed, for example, it is conceivable that a pedestrian (moving body 3) intrudes into the warning area 203. In the case of FIG. 18, since it is near the crosswalk, intrusion into the warning area 203 is not permitted, and thus the deceleration instruction is notified to the in-vehicle device 1. However, since the warning area 203 is reduced by deceleration, the intrusion state is eliminated and the vehicle is accelerated to the target speed again.

Therefore, as illustrated in FIG. 19, by determining the speed on the basis of a margin and setting the warning area 203 (small), it is possible to prevent frequent acceleration/deceleration and realize stable traveling while ensuring safety.

According to the control system 0, the in-vehicle device 1, and the control device 2 in the fourth embodiment, when interference is expected, the number of times of acceleration/deceleration can be reduced by adjusting the speed of a specific moving body (in-vehicle device 1), and stable traveling can be realized.

[Fifth embodiment]

A control system 0 according to a fifth embodiment of the present invention will be described.

The difference from the first, second, third, and fourth embodiments is that by transmitting the moving body information 201, the information on the blockage area 202, and the warning area 203 to the in-vehicle device 1, a trajectory for avoiding the area is calculated in the automatic driving unit 11, and traveling can be performed without generating interference.

Note that the same reference numerals are given to the same configurations as those of the first, second, third, and fourth embodiments, and the description thereof will be omitted.

<Configurations of control device and in-vehicle device>

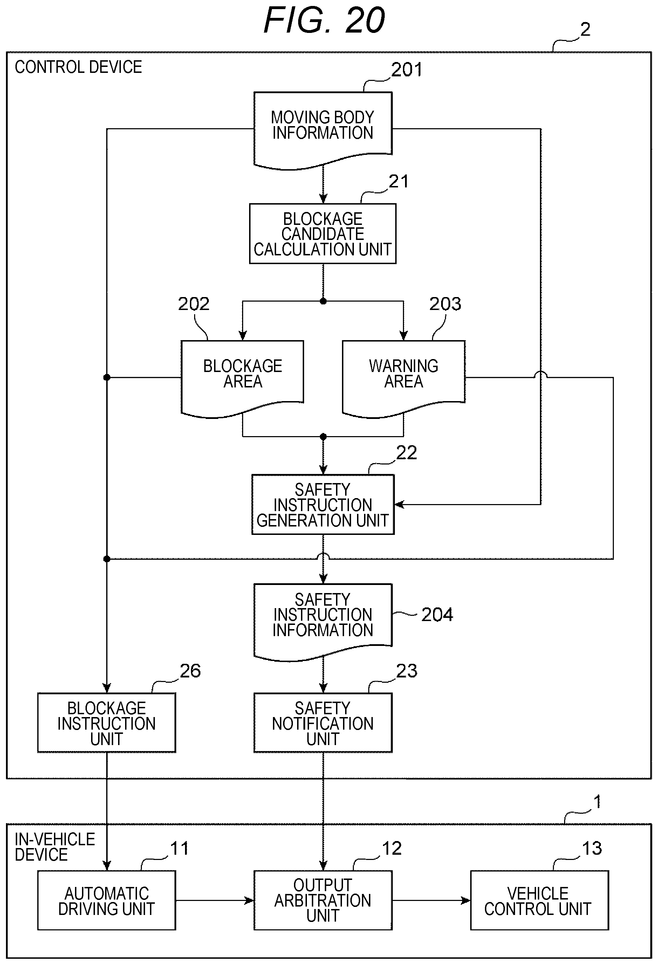

FIG. 20 is a diagram illustrating an outline of a functional block configuration and an overall operation flow of the control system 0 in the fifth embodiment.

In addition to the configuration of the first embodiment, the control device 2 includes a blockage instruction unit 26 that transmits (notifies) the moving body information 201, the blockage area 202, and the warning area 203 to (the automatic driving unit 11 of) the in-vehicle device 1.

In addition, the automatic driving unit 11 can calculate a trajectory for avoiding the blockage area 202 and the warning area 203 by a known path planning method.

That is, the in-vehicle device 1 includes the blockage control cooperative automatic driving unit 11 that does not travel outside the blockage area 202 notified from the control device 2. Furthermore, in the present embodiment, (the automatic driving unit 11 of) the in-vehicle device 1 can calculate an avoidance trajectory for avoiding the blockage area 202 and the warning area 203 on the basis of the moving body information, the blockage area information, and the warning area information.

According to the control system 0, the in-vehicle device 1, and the control device 2 in the fifth embodiment, by transmitting the information of the blockage area 202 and the warning area 203 to the in-vehicle device 1, it is possible to calculate a trajectory for avoiding the area in the automatic driving unit 11 and travel without generating interference.

[Summary of first to fifth embodiments]

As described above, the control system 0 of the present embodiment is a control system 0 including a moving body (in-vehicle device 1 and moving body 3) and a control device 2, in which the control device 2 includes: a blockage candidate calculation unit 21 that calculates, in a specific moving body (in-vehicle device 1), a blockage area 202 on the basis of a position, a travel plan, and a speed of the specific moving body, and calculates a warning area 203 (outside the blockage area 202) on the basis of the blockage area 202, a braking time of the specific moving body, and peripheral information (such as a speed of the moving body 3 (current speed or assumed maximum speed)), a safety instruction generation unit 22 that generates a safety action instruction on the basis of a type of the area (blockage area 202, warning area 203) calculated by the blockage candidate calculation unit 21 and a type (unmanned vehicle, manned vehicle) of an intruding moving body (moving body 3) (around the specific moving body) that intrudes into the area, and a safety notification unit 23 that notifies the specific moving body of the safety action instruction, and the specific moving body performs an action on the basis of the safety action instruction notified from the safety notification unit 23.

The intruding moving body (moving body 3) in the safety instruction generation unit 22 means a moving body that has intruded into the blockage area 202 or the warning area 203 of the specific moving body, and the specific moving body (in-vehicle device 1) in the safety instruction generation unit 22 means a moving body that has been intruded into the blockage area 202 or the warning area 203 by the intruding moving body.

According to the present embodiment, the blockage area 202 and the warning area 203 are calculated, the intrusion of the moving body is not permitted in the blockage area 202, and the intrusion is permitted in the warning area 203 according to the type of the moving body, so that it is possible to ensure safety even in a human-mixed environment and to perform efficient travel arbitration.

Note that the present invention is not limited to the above-described embodiments, and includes various modifications. For example, the above-described embodiments have been described in detail in order to explain the present invention in an easy-to-understand manner, and are not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add, delete, and replace other configurations for a part of the configuration of each embodiment.

Further, each of the configurations, functions, processing units, processing means, etc. described above may be implemented by hardware, for example, by designing part or all of them with an integrated circuit. Further, each configuration, function, etc. described above may be implemented by software by the processor interpreting and executing a program that implements each function. Information such as a program, a table, and a file for implementing each function can be placed in a memory, a hard disk, a storage device such as a solid state drive (SSD), or a recording medium such as an IC card, an SD card, or a DVD.

Further, control lines and information lines indicate what is considered to be necessary for the description, and not all control lines and information lines in the product are necessarily shown. In practice, almost all configurations may be considered to be mutually connected.

Reference Signs List

| | |
|---|---|
| 0 | control system |
| 1 | in-vehicle device (specific moving body) |
| 11 | automatic driving unit |
| 12 | output arbitration unit |
| 13 | vehicle control unit |
| 2 | control device |
| 21 | blockage candidate calculation unit |
| 22 | safety instruction generation unit |
| 23 | safety notification unit |
| 24 | speed adjuster |
| 25 | speed notification unit |
| 26 | blockage instruction unit |
| 201 | moving body information |
| 202 | blockage area |
| 203 | warning area |
| 204 | safety instruction information |
| 205 | rule information |
| 206 | speed information |
| 3 | moving body (intruding moving body) |

**Claims**

1. A control system including a moving body and a control device, the control device including:

    a blockage candidate calculation unit that calculates, in a specific moving body, a blockage area on a basis of a position, a travel plan, and a speed of the specific moving body, and calculates a warning area on a basis of the blockage area, a braking time of the specific moving body, and peripheral information;
    a safety instruction generation unit that generates a safety action instruction on a basis of a type of an area calculated by the blockage candidate calculation unit and a type of an intruding moving body intruding into the area; and
    a safety notification unit that notifies the specific moving body of the safety action instruction,
    wherein the specific moving body performs an action on a basis of the safety action instruction notified from the safety notification unit.

2. The control system according to claim 1, wherein the control device includes a blockage instruction unit that notifies the specific moving body of the blockage area information, the warning area information, and the moving body information.

3. The control system according to claim 1, wherein the control device includes a speed adjuster that outputs a speed instruction to the specific moving body when a position of the intruding moving body after an arbitrary time is positioned in the blockage area or the warning area of the specific moving body in a path on which the specific moving body moves.

4. The control system according to claim 1, wherein

    the blockage candidate calculation unit
    calculates a braking distance and a braking time on a basis of a position, a travel plan, and a speed of the specific moving body in the specific moving body, and calculates an area based on the travel plan and the braking distance as the blockage area, and
    calculates, as the warning area, an area where the intruding moving body can move outside the blockage area during the braking time on a basis of the blockage area, the braking time, and a speed of the intruding moving body or an assumed maximum speed of the intruding moving body.

5. The control system according to claim 1, wherein

the blockage candidate calculation unit

calculates a braking distance and a braking time on a basis of a position, a travel plan, and a speed of the specific moving body in the specific moving body, and calculates an area based on the travel plan and the braking distance as the blockage area, and

calculates, as the warning area, an area in which the intruding moving body travels outside the blockage area during the braking time on a basis of a position and a travel plan of the intruding moving body, and a speed of the intruding moving body or an assumed maximum speed of the intruding moving body.

6. The control system according to claim 1, wherein the safety instruction generation unit generates a safety action instruction on a basis of a rule in addition to the type of the area calculated by the blockage candidate calculation unit and the type of the intruding moving body intruding into the area.

7. The control system according to claim 1, wherein the type of the moving body is classified into at least a moving body capable of controlling an action and a moving body incapable of controlling an action.

8. The control system according to claim 1, wherein the type of the moving body is classified into an automatic driving vehicle, a non-automatic driving vehicle, and a pedestrian.

9. The control system according to claim 6, wherein the rule includes road information including at least one of a sidewalk, a separation zone, a crosswalk, a plurality of lanes, or a work area.

10. The control system according to claim 1, wherein the intruding moving body in the safety instruction generation unit means a moving body that has intruded into the blockage area or the warning area of the specific moving body, and the specific moving body in the safety instruction generation unit means a moving body that has been intruded into the blockage area or the warning area by the intruding moving body.

11. The control system according to claim 8, wherein the pedestrian or the manned vehicle has a device having a function of notifying intruding moving body notification information notified from the control device by at least one of sound, light, vibration, or video.

12. The control system according to claim 1, wherein the specific moving body includes a blockage control cooperative automatic driving unit that does not travel outside the blockage area notified from the control device.

13. The control system according to claim 1, wherein the specific moving body calculates an avoidance trajectory on a basis of the moving body information, the blockage area information, and the warning area information.

14. A control method comprising:

a blockage candidate calculation step of, in a specific moving body, calculating a blockage area on a basis of a position, a travel plan, and a speed of the specific moving body, and calculating a warning area outside the blockage area on a basis of the blockage area, a braking time of the specific moving body, and peripheral information;

a safety instruction generation step of generating a safety action instruction on a basis of a type of an area calculated in the blockage candidate calculation step and a type of an intruding moving body intruding into the area; and

a safety notification step of notifying the specific moving body of the safety action instruction.

15. A control program for causing a computer to execute:

a blockage candidate calculation procedure of, in a specific moving body, calculating a blockage area on a basis of a position, a travel plan, and a speed of the specific moving body, and calculating a warning area outside the blockage area on a basis of the blockage area, a braking time of the specific moving body, and peripheral information;

a safety instruction generation procedure of generating a safety action instruction on a basis of a type of an area calculated in the blockage candidate calculation procedure and a type of an intruding moving body intruding into the area; and

a safety notification procedure of notifying the specific moving body of the safety action instruction.

# FIG. 1

# FIG. 2

2

CONTROL DEVICE

MOVING BODY INFORMATION — 201

BLOCKAGE CANDIDATE CALCULATION UNIT — 21

BLOCKAGE AREA — 202

WARNING AREA — 203

SAFETY INSTRUCTION GENERATION UNIT — 22

SAFETY INSTRUCTION INFORMATION — 204

SAFETY NOTIFICATION UNIT — 23

1

IN-VEHICLE DEVICE

AUTOMATIC DRIVING UNIT — 11

OUTPUT ARBITRATION UNIT — 12

VEHICLE CONTROL UNIT — 13

# FIG. 3

201

| ID | POSITION* | SPEED | TYPE | PATH |
|---|---|---|---|---|
| 1 | (X1,Y1) | V1 | UNMANNED VEHICLE | STRAIGHT |
| 2 | (X2,Y2) | V2 | MANNED VEHICLE | — |
| 3 | (X3,Y3) | — | PEDESTRIAN | — |
| ... | ... | | ... | ... |

*WORLD COORDINATE SYSTEM OR INFORMATION THAT CAN BE CONVERTED INTO WORLD COORDINATE SYSTEM IS INCLUDED.

# FIG. 4

203 WARNING AREA

202 BLOCKAGE AREA

# FIG. 5

203

WARNING AREA

202

BLOCKAGE AREA

# FIG. 6

204

| ID | SAFETY INSTRUCTION |
|----|--------------------|
| 1 | DECELERATION |

# FIG. 7

START

[DESCRIPTION OF EACH VARIABLE]
COORDINATE SYSTEM: VEHICLE COORDINATE SYSTEM
CURRENT POSITION: (0,0) IN VEHICLE COORDINATE SYSTEM
TRAJECTORY OF HOST VEHICLE (VEHICLE CENTER): y=f(x)
CURRENT SPEED: V0
DECELERATION: −A

S211

CALCULATE BRAKING TIME T_stop.
T_stop=V0/A

S212

CALCULATE BRAKING DISTANCE D_stop.
D_stop=V0*T_stop+(−A*T_stop^2)/2

S213

STOP POSITION OF HOST VEHICLE IS
REFERRED TO AS (X_stop,Y_stop).
SINCE TRAJECTORY IS EXPRESSED BY y=f(x),
X_stop SATISFIES

$$\int_0^{X\_stop} \sqrt{1 + \left(\frac{dy}{dx}\right)^2}\ dx = D\_stop.$$

S214

CALCULATE
BLOCKAGE AREA

S215

CALCULATE
WARNING AREA

S216

END

# FIG. 8

VEHICLE LENGTH
MARGIN

STOP POSITION

VEHICLE WIDTH
MARGIN

$y = f(x)$

$y = g(x)$

$y = h(x)$

VEHICLE POSITION
: (0,0)

VEHICLE WIDTH
MARGIN

VEHICLE LENGTH
MARGIN

VEHICLE COORDINATE
SYSTEM

y

x

IN THIS EXAMPLE,
VEHICLE
POSITION IS
VEHICLE CENTER

# FIG. 9

START

i=0
D_sum=0 — S2151

S2152

WAY-POINT EXISTS? — NO

YES

D_i=(DISTANCE BETWEEN WP_i AND WP_i+1) — S2153

S2154

D_sum+D_i > D_stop? — YES

NO

D_sum+=D_i — S2155

S2156

AREA OBTAINED BY EXTENDING VEHICLE LENGTH MARGIN
IN LINE SEGMENT DIRECTION CONNECTING WP_i AND WP_i+1 AND
VEHICLE WIDTH MARGIN IN NORMAL DIRECTION OF LINE SEGMENT
CONNECTING WP_i AND WP_i+1 IS ADDED TO BLOCKAGE AREA.
i=i+1

S2157

WP_stop IS CONSIDERED ON STRAIGHT LINE CONNECTING WPs.
(DISTANCE BETWEEN WP_i AND WP_stop)=D_stop−D_sum

S2158

AREA OBTAINED BY EXTENDING VEHICLE LENGTH MARGIN
IN LINE SEGMENT DIRECTION CONNECTING WP_i AND WP_stop
AND VEHICLE WIDTH MARGIN IN NORMAL DIRECTION
OF LINE SEGMENT CONNECTING WP_i AND WP_stop
IS ADDED TO BLOCKAGE AREA.

END

# FIG. 10

| WP | |
|---|---|
| WP_1 | (X_WP_1,Y_WP_1) |
| WP_2 | (X_WP_2,Y_WP_2) |
| WP_3 | (X_WP_3,Y_WP_3) |
| WP_4 | (X_WP_4,Y_WP_4) |
| . . . | . . . |

WP_4

WP_3

STOP POSITION
(X_stop,Y_stop)

WP_2

VEHICLE WIDTH MARGIN

VEHICLE LENGTH MARGIN

WP_1

# FIG. 11

```
           ┌─────────┐
           │  START  │
           └────┬────┘
                │
                ▼                        S221
        ╱───────────────╲
       ╱    IS THERE      ╲     YES
      ╱ OTHER MOVING BODY IN ╲─────────────────────────┐
      ╲   BLOCKAGE AREA?    ╱                           │
       ╲───────┬───────────╱                            │
               │ NO                                     │
               ▼                    S222                │
        ╱───────────────╲                               │
  NO   ╱    IS THERE      ╲                             │
 ┌─────╱ OTHER MOVING BODY ╲                            │
 │     ╲  IN WARNING AREA? ╱                            │
 │      ╲───────┬─────────╱                             │
 │              │ YES                                   │
 │              ▼                  S223                 │
 │       ╱───────────────╲                              │
 │      ╱   IS OTHER       ╲   NO                       │
 │     ╱ MOVING BODY UNMANNED ╲──────────────────────┐  │
 │     ╲    VEHICLE?       ╱                         │  │
 │      ╲───────┬─────────╱                          │  │
 │              │ YES                                │  │
 │              ▼                  S224              │  │
 │      ╱─────────────────╲                          │  │
 │     ╱   TRAVEL PLAN IS   ╲   NO                    │  │
 │    ╱ PLANNED NOT TO INTRUDE ╲──────┐               │  │
 │    ╲   INTO BLOCKAGE     ╱         │               │  │
 │     ╲     AREA?         ╱          ▼    S225        │  │
 │      ╲──────┬──────────╱     ╱──────────────╲       │  │
 │             │ YES           ╱ IS HOST VEHICLE ╲  NO  │  │
 │             │              ╲   PRIORITIZED?   ╱──────┤  │
 │             │               ╲───────┬────────╱       │  │
 │             │                       │ YES            │  │
 │             │                       │           S226 │  │
 │             │                       │    ┌──────────────────┐
 │             │                       │    │     GENERATE      │
 └─────────────┤◄──────────────────────┤    │ SAFETY INSTRUCTION│◄─┘
               │◄───────────────────────────│    INFORMATION    │
               │                            └──────────────────┘
               ▼
           ┌─────────┐
           │   END   │
           └─────────┘
```

# FIG. 12

START

↓

ACQUIRE
RULE INFORMATION — S227

↓

S221

IS THERE
OTHER MOVING BODY
IN BLOCKAGE AREA? — YES

NO ↓

S222

IS THERE
OTHER MOVING BODY
IN WARNING AREA? — YES

NO ↓

S228

IS INTRUSION
PERMITTED WITH
REFERENCE TO RULE
INFORMATION?

YES ←

NO ↓

GENERATE SAFETY
INSTRUCTION INFORMATION — S226

↓

END

# FIG. 13

205

| INTRUDING MOVING BODY TYPE | AREA TYPE | SAFETY INSTRUCTION TO TARGET VEHICLE |
|---|---|---|
| UNMANNED VEHICLE (CONTROLLABLE) | BLOCKAGE | STOP |
| | WARNING | CONTROL BY PRIORITY (FIRST EMBODIMENT) |
| MANNED VEHICLE (UNCONTROLLABLE)/ PEDESTRIAN (WORKER/EXTERNAL WORKER) | BLOCKAGE | STOP |
| | WARNING | REFERENCE TO RULE |

| AREA ID | INTRUSION PERMISSION | CONTROL IN CASE OF VIOLATION | AREA | REMARKS |
|---|---|---|---|---|
| 1 | PROHIBIT PEDESTRIAN (EXTERNAL WORKER) | DECELERATION/ STOP | X_ LEFT END OF SIDEWALK $\leq x \leq$ X_ RIGHT END OF SIDEWALK Y_ LOWER END OF SIDEWALK $\leq y \leq$ Y_ UPPER END OF SIDEWALK | SIDEWALK |
| 2 | PERMIT ONCOMING VEHICLE | — | X_ LEFT END OF ONCOMING LANE $\leq x \leq$ X_ RIGHT END OF ONCOMING LANE Y_ LOWER END OF ONCOMING LANE $\leq y \leq$ Y_ UPPER END OF ONCOMING LANE | WITH SEPARATION ZONE |
| 3 | PROHIBIT MANNED VEHICLE AND PEDESTRIAN | DECELERATION/ STOP | . . . | CROSSWALK |
| 4 | ALL PROHIBITED | DECELERATION/ STOP | . . . | PLURALITY OF LANES |
| 5 | PERMIT MANNED VEHICLE | — | . . . | PLURALITY OF LANES (LANE CHANGE PROHIBITED SECTION) |
| 6 | ALL PROHIBITED | DECELERATION/ STOP | . . . | WORK AREA |
| . . . | . . . | . . . | . . . | . . . |

# FIG. 14

START

ACQUIRE
RULE INFORMATION — S227

S221
IS THERE
OTHER MOVING BODY
IN BLOCKAGE AREA?    YES

NO

S222
IS THERE
OTHER MOVING BODY
IN WARNING AREA?    YES

NO

S228
IS INTRUSION
PERMITTED WITH
REFERENCE TO RULE
INFORMATION?

YES

NO

GENERATE SAFETY
INSTRUCTION INFORMATION — S226

GENERATE INTRUDING
MOVING BODY NOTIFICATION
INFORMATION — S229

END

# FIG. 15

205

| INTRUDING MOVING BODY TYPE | AREA TYPE | SAFETY INSTRUCTION TO TARGET VEHICLE | SAFETY INSTRUCTION TO INTRUDING MOVING BODY |
|---|---|---|---|
| UNMANNED VEHICLE (CONTROLLABLE) | BLOCKAGE | STOP | STOP |
| | WARNING | CONTROL BY PRIORITY | CONTROL BY PRIORITY |
| MANNED VEHICLE (UNCONTROLLABLE)/ PEDESTRIAN (WORKER/EXTERNAL WORKER) | BLOCKAGE | STOP | WARNING |
| | WARNING | REFERENCE TO RULE | REFERENCE TO RULE |

| AREA ID | INTRUSION PERMISSION | CONTROL IN CASE OF VIOLATION | AREA | REMARKS |
|---|---|---|---|---|
| 1 | PROHIBIT PEDESTRIAN (EXTERNAL WORKER) | DECELERATION/ STOP | X_LEFT END OF SIDEWALK $\leq x \leq$ X_RIGHT END OF SIDEWALK Y_LOWER END OF SIDEWALK $\leq y \leq$ Y_UPPER END OF SIDEWALK | SIDEWALK |
| 2 | PERMIT ONCOMING VEHICLE | — | X_LEFT END OF ONCOMING LANE $\leq x \leq$ X_RIGHT END OF ONCOMING LANE Y_LOWER END OF ONCOMING LANE $\leq y \leq$ Y_UPPER END OF ONCOMING LANE | WITH SEPARATION ZONE |
| 3 | PROHIBIT MANNED VEHICLE AND PEDESTRIAN | DECELERATION/ STOP | . . . | CROSSWALK |
| 4 | ALL PROHIBITED | DECELERATION/ STOP | . . . | PLURALITY OF LANES |
| 5 | PERMIT MANNED VEHICLE | — | . . . | PLURALITY OF LANES (LANE CHANGE PROHIBITED SECTION) |
| 6 | ALL PROHIBITED | DECELERATION/ STOP | . . . | WORK AREA |
| . . . | . . . | . . . | . . . | . . . |

# FIG. 16

CONTROL DEVICE — 2

MOVING BODY INFORMATION — 201

SPEED ADJUSTER — 24

BLOCKAGE CANDIDATE CALCULATION UNIT — 21

BLOCKAGE AREA — 202

WARNING AREA — 203

SPEED INFORMATION — 206

SPEED NOTIFICATION UNIT — 25

SAFETY INSTRUCTION GENERATION UNIT — 22

SAFETY INSTRUCTION INFORMATION — 204

SAFETY NOTIFICATION UNIT — 23

IN-VEHICLE DEVICE — 1

AUTOMATIC DRIVING UNIT — 11

OUTPUT ARBITRATION UNIT — 12

VEHICLE CONTROL UNIT — 13

# FIG. 17

START

S241

[CALCULATION OF INTERSECTION BETWEEN TRAJECTORY AND CROSSWALK]
SINCE CROSSWALK CAN BE EXPRESSED BY FUNCTION, INTERSECTION
(X_ CROSSWALK, Y_CROSSWALK) WITH TRAJECTORY CAN BE CALCULATED.

S242

[CALCULATION OF DISTANCE BETWEEN MOVING BODY AND CROSSWALK]
PEDESTRIAN (X3,Y3) IN FIG. 3 WILL BE DESCRIBED AS AN EXAMPLE.
DISTANCE D_ CROSSWALK CAN BE CALCULATED
BY $\sqrt{((X3-X\_CROSSWALK)^2+(Y3-Y\_CROSSWALK)^2)}$.

S243

[CALCULATION OF ADJUSTMENT SPEED]
ADJUSTMENT SPEED V_ADJUSTMENT IS
V_ADJUSTMENT=(A/V_other)*(D_CROSSWALK−D_PEDESTRIAN MARGIN)

S244

$(X\_CROSSWALK-X\_stop)^2$
$+(Y\_CROSSWALK-Y\_stop)^2$
$< (V\_other*T\_stop)^2$ ?

NO

YES

S245

V0 > V_ ADJUSTMENT?

NO

YES

S246

[SPEED ADJUSTMENT PROCESSING]
INSTRUCT V_ADJUSTMENT TO IN-VEHICLE DEVICE.

END

# FIG. 18

D_CROSSWALK

INTERSECTION BETWEEN
TRAJECTORY AND CROSSWALK
(X_CROSSWALK, Y_CROSSWALK)

3

WARNING AREA
AFTER N SECONDS

1

# FIG. 19

D_PEDESTRIAN MARGIN

3

WARNING AREA
IN CASE OF DECELERATION

1

## FIG. 20

CONTROL DEVICE — 2

201
MOVING BODY INFORMATION

21
BLOCKAGE CANDIDATE CALCULATION UNIT

202
BLOCKAGE AREA

203
WARNING AREA

22
SAFETY INSTRUCTION GENERATION UNIT

204
SAFETY INSTRUCTION INFORMATION

26
BLOCKAGE INSTRUCTION UNIT

23
SAFETY NOTIFICATION UNIT

IN-VEHICLE DEVICE — 1

11
AUTOMATIC DRIVING UNIT

12
OUTPUT ARBITRATION UNIT

13
VEHICLE CONTROL UNIT

## EP 4 583 075 A1

### INTERNATIONAL SEARCH REPORT

| International application No. |
|---|
| **PCT/JP2023/016705** |

| A. | CLASSIFICATION OF SUBJECT MATTER |
|---|---|

*G08G 1/16*(2006.01)i; *B60W 30/08*(2012.01)i; *G08G 1/09*(2006.01)i
FI:  G08G1/16 A; G08G1/09 V; B60W30/08

According to International Patent Classification (IPC) or to both national classification and IPC

| B. | FIELDS SEARCHED |
|---|---|

Minimum documentation searched (classification system followed by classification symbols)

G08G1/00-99/00; B60W30/00-60/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/025087 A1 (SOKEN INC) 03 February 2022 (2022-02-03) | 1-15 |
| A | JP 2021-162976 A (HITACHI CONSTRUCTION MACHINERY CO., LTD.) 11 October 2021 (2021-10-11) | 1-15 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/016705**

| Patent document cited in search report | | | Publication date (day/month/year) | Patent family member(s) | | | Publication date (day/month/year) |
|---|---|---|---|---|---|---|---|
| WO | 2022/025087 | A1 | 03 February 2022 | US | 2023/0174106 | A1 | |
| | | | | CN | 115884908 | A | |
| JP | 2021-162976 | A | 11 October 2021 | EP | 4130920 | A1 | |
| | | | | CN | 115298719 | A | |
| | | | | AU | 2021247535 | A1 | |
| | | | | CA | 3172652 | A1 | |
| | | | | US | 2023/0123961 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021162976 A